# FASCICULE DE BREVET EUROPEEN

(11) **EP 3 367 478 B1**
(45) Date de publication et mention de la délivrance du brevet: **25.11.2020**
(21) Numéro de dépôt: 18157604.2
(22) Date de dépôt: 20.02.2018
(51) Int. Cl.: H01M 4/04, H01M 4/13, H01M 10/0525

(54) **PROCÉDÉ DE FABRICATION D'UNE ÉLECTRODE DE BATTERIE À REVÊTEMENT D'ENCRE DISCONTINU**
HERSTELLUNGSVERFAHREN EINER BATTERIEELEKTRODE MIT EINER DISKONTINUIERLICHEN TINTENBESCHICHTUNG
METHOD FOR MANUFACTURING A BATTERY ELECTRODE HAVING DISCONTINUOUS INK COATING

(30) Priorité: 27.02.2017 FR 1751555
(43) Date de publication de la demande: 29.08.2018
(73) Titulaire: Commissariat à l'énergie atomique et aux énergies alternatives, 75015 Paris (FR)
(72) Inventeur: CLAUDE, Guillaume, 38140 SAINT MARTIN D'URIAGE (FR)
(74) Mandataire: Brevalex

(56) Documents cités:
- FR-A1- 3 011 391
- US-A1- 2007 187 231
- US-A1- 2010 330 267

## Description

### DOMAINE TECHNIQUE

La présente invention se rapporte à la fabrication d'une électrode de batterie, présentant un revêtement d'encre discontinu.

Elle concerne préférentiellement les électrodes pour batteries lithium-ion.

### ETAT DE LA TECHNIQUE ANTERIEURE

Le cœur électrochimique d'une batterie lithium-ion est formé par l'assemblage d'une électrode négative, d'une électrode positive et d'un séparateur agencé entre ces deux électrodes. Cet assemblage est agencé dans un boîtier étanche dans lequel est injecté un électrolyte liquide.

La fabrication des électrodes consiste tout d'abord à enduire un feuillard métallique avec une encre, qui comprend classiquement les ingrédients constitutifs de l'électrode, comme par exemple le matériau actif, un liant polymérique du type PVDF, un matériau conducteur d'électricité, etc.

Une fois l'encre déposée sur le feuillard, l'ensemble est calandré afin d'obtenir les caractéristiques souhaitées pour l'électrode, comme la densité d'énergie, la porosité, la conductivité électrique, etc. Le calandrage est réalisé en faisant défiler le feuillard entre des rouleaux de calandrage, selon une direction longitudinale de l'électrode à fabriquer. Ces rouleaux sont habituellement entraînés en rotation, et c'est au contact de ces derniers que le feuillard se déplace au sein du dispositif de calandrage.

Généralement, le revêtement d'encre sur le feuillard est continu. Cependant, il existe des électrodes de batterie sur lesquelles l'encre doit se présenter sous forme de zones espacées les unes des autres, selon la direction longitudinale. Dans ce cas de figure, le calandrage peut s'avérer problématique étant donné que durant le défilement, les rouleaux rencontrent alternativement les zones d'encre et les zones évidées. L'écart entre les rouleaux diminue ainsi dès qu'ils entrent au contact d'une zone évidée, ce qui rend difficile la maîtrise du profil de l'électrode en bord de zones d'encre.

De plus, dans le cas où le défilement du feuillard est assuré par le contact avec les rouleaux de calandrage, le passage de ces rouleaux au niveau des zones évidées du feuillard peut engendrer une perte d'entraînement.

Pour pallier ces inconvénients, l'enduction d'encre peut être réalisée en continue sur le feuillard avant son calandrage, puis l'encre en surplus est retirée seulement après la sortie du dispositif de calandrage. Le retrait s'effectue alors manuellement à l'aide d'un coton tige et d'un solvant, afin de faire apparaître les zones d'encre espacées les unes des autres. D'autres techniques sont possibles, comme par exemple l'ablation laser. Dans tous les cas, cette étape additionnelle de retrait d'une partie de l'encre en sortie du calandrage complexifie sensiblement le procédé de fabrication de l'électrode. Document US 2007/187231 divulgue un procédé de fabrication d'une électrode de batterie comprenant les étapes suivantes: réalisation des zones de matériau actif sur un premier tronçon longitudinal d'un support métallique et réalisation d'au moins une zone additionnelle de matériau actif sur au moins un second tronçon longitudinal; passage du support métallique équipé de son revêtement entre des rouleaux de pression selon une direction longitudinale; et séparation des tronçons.

Ainsi, il subsiste un besoin d'optimisation d'un tel procédé de fabrication d'électrode, de manière à assurer la qualité du produit obtenu tout en présentant une mise en œuvre simplifiée.

### EXPOSÉ DE L'INVENTION

Pour répondre à ce besoin, l'invention a tout d'abord pour objet un procédé de fabrication d'au moins une électrode de batterie à revêtement d'encre discontinu, selon les caractéristiques de la revendication 1.

L'invention apporte ainsi une solution simple et astucieuse, permettant d'optimiser la fabrication d'une électrode de batterie à revêtement d'encre discontinu. La ou les zones d'encre additionnelles, déposées sur le support métallique avant son calandrage, évitent en effet les réductions brusques d'écartement des rouleaux au cours du calandrage. Le profil de l'électrode en bord de zones d'encre est ainsi mieux maîtrisé, sans pour autant que la mise en œuvre du procédé de fabrication soit complexifiée. Effectivement, il suffit de séparer les différents tronçons en fin de calandrage pour obtenir l'électrode souhaitée, via le premier tronçon. Le ou les autres seconds tronçons peuvent d'ailleurs être réutilisés ou recyclés, étant néanmoins précisé qu'au moins l'un d'eux forme une autre électrode. En d'autres termes, les éléments employés pour améliorer la qualité de l'électrode souhaitée forment ainsi eux-mêmes une ou plusieurs autres électrodes, calandrées simultanément avec l'électrode émanant du premier tronçon.

Par ailleurs, lorsque le défilement du support est assuré par les rouleaux de calandrage, le fait de prévoir un contact permanent entre ces derniers et le support revêtu d'encre évite les à-coups et les pertes d'entraînement du support en défilement.

Enfin, il est noté que le principe propre à l'invention peut être mis en œuvre sur l'une ou l'autre des deux surfaces opposées du support métallique, ou encore plus préférentiellement sur ses deux surfaces.

L'invention prévoit par ailleurs au moins l'une quelconque des caractéristiques optionnelles suivantes, prises isolément ou en combinaison.

Selon un premier mode de réalisation préféré, au moins un second tronçon de support est revêtu d'une zone d'encre additionnelle continue le long de la direction longitudinale du support. Plus préférentiellement, deux seconds tronçons de support se situent respectivement de part et d'autre du premier tronçon, et chacun des deux seconds tronçons est revêtu d'une zone d'encre additionnelle continue le long de la direction longitudinale du support.

Ainsi, après ladite étape de séparation des tronçons, au moins l'un des seconds tronçons peut constituer une autre électrode à revêtement d'encre continu.

Selon un second mode de réalisation préféré, au moins un second tronçon de support est revêtu d'une pluralité de zones d'encre additionnelles espacées les unes des autres selon la direction longitudinale du support. Plus préférentiellement, plusieurs seconds tronçons de support se situent de part et d'autre du premier tronçon, et chacun des seconds tronçons est revêtu d'une pluralité de zones d'encre additionnelles espacées les unes des autres selon la direction longitudinale du support.

Par exemple, les zones d'encre et les zones d'encre additionnelles sont agencées en quinconce sur le support, et/ou l'ensemble formé par les zones d'encre du premier tronçon est identique à l'ensemble formé par les zones d'encre additionnelles d'au moins un second tronçon lui étant directement consécutif dans la direction latérale.

Alternativement, l'étendue longitudinale des zones d'encre diffère de l'étendue longitudinale des zones d'encre additionnelles d'au moins l'un des seconds tronçons, et/ou l'espacement entre deux zones d'encre directement consécutives diffère de l'espacement entre deux zones d'encre additionnelles directement consécutives d'au moins l'un des seconds tronçons.

Ici également, après ladite étape de séparation des tronçons, au moins l'un des seconds tronçons constitue une autre électrode à revêtement d'encre discontinu. Comme pour le mode de réalisation précédent à revêtement d'encre continu, ce sont de préférence chacun des seconds tronçons qui forment une électrode.

En outre, le support est préférentiellement réalisé dans un matériau à base de cuivre ou d'aluminium ou par un feuillard de carbone.

De préférence et comme évoqué ci-dessus, lors de l'étape de calandrage, le défilement du support revêtu d'encre est assuré par contact de ce dernier avec les rouleaux de calandrage entraînés en rotation.

De préférence, les zones d'encre et les zones d'encre additionnelles du revêtement de support présentent chacune une épaisseur sensiblement identique.

De préférence, comme évoqué ci-dessus, l'autre des deux faces opposées du support métallique est également équipée du principe propre à l'invention, en étant revêtue de zones d'encre ainsi que d'au moins une zone d'encre additionnelle.

Enfin, l'invention a également pour objet un support métallique revêtu d'encre, destiné à la fabrication d'au moins une électrode de batterie à revêtement d'encre discontinu, ladite électrode étant destinée à comprendre un feuillard métallique revêtu, sur au moins l'une de ses deux surfaces opposées, d'une pluralité de zones d'encre espacées les unes des autres selon une direction longitudinale de l'électrode.

Selon l'invention, il est prévu un support métallique revêtu, sur au moins l'une de ses deux surfaces opposées :
- de zones d'encre sur un premier tronçon longitudinal du support ;
- d'au moins une zone d'encre additionnelle sur au moins un second tronçon longitudinal du support décalé du premier tronçon selon une direction latérale du support, les zones d'encre ainsi que chaque zone d'encre additionnelle formant conjointement un revêtement de support agencé de telle sorte qu'au moins une zone d'encre additionnelle d'un second tronçon se situe en regard latéralement de chaque zone évidée agencée entre deux zones d'encre directement consécutives du premier tronçon.

De plus, l'ensemble formé par les zones d'encre du premier tronçon est espacé latéralement de l'ensemble formé par chaque zone d'encre additionnelle d'au moins un second tronçon lui étant directement consécutif dans la direction latérale.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de face d'une batterie lithium-ion, comprenant des électrodes destinées à être obtenues par la mise en œuvre d'un procédé de fabrication selon l'invention ;
- la figure 2a est une vue schématique en coupe longitudinale d'une électrode de batterie destinée à être obtenue par la mise en œuvre du procédé de fabrication selon l'invention ;
- la figure 2b est une vue analogue à celle de la figure 2a, selon une alternative de réalisation ;
- la figure 3 est une vue du dessus d'un support métallique revêtu d'encre, selon un premier mode de réalisation préféré de l'invention ;
- la figure 4 est une vue en coupe prise le long de la ligne IV-IV de la figure 3 ;
- la figure 5 est une vue schématique d'une étape de calandrage mise en œuvre lors du procédé de fabrication visant à obtenir l'électrode de la figure 2a ;
- la figure 6 représente les électrodes obtenues suite à la séparation des tronçons du support issu du calandrage ;
- la figure 7 est une vue analogue à celle de la figure 3, selon un second mode de réalisation préféré de l'invention ;
- la figure 8 est une vue schématique du dessus du support métallique revêtu d'encre montré sur la figure 7 ;
- la figure 9 est une vue schématique d'une étape de calandrage du support revêtu d'encre montré sur les figures 7 et 8 ;
- la figure 10 est une vue représentant les électrodes obtenues suite à la séparation des tronçons du support issus du calandrage représenté sur la figure 9 ; et
- la figure 11 est une vue similaire à celle de la figure 7, selon encore un autre mode de réalisation préféré de l'invention.

### EXPOSÉ DÉTAILLÉ DE MODES DE RÉALISATION PRÉFÉRÉS

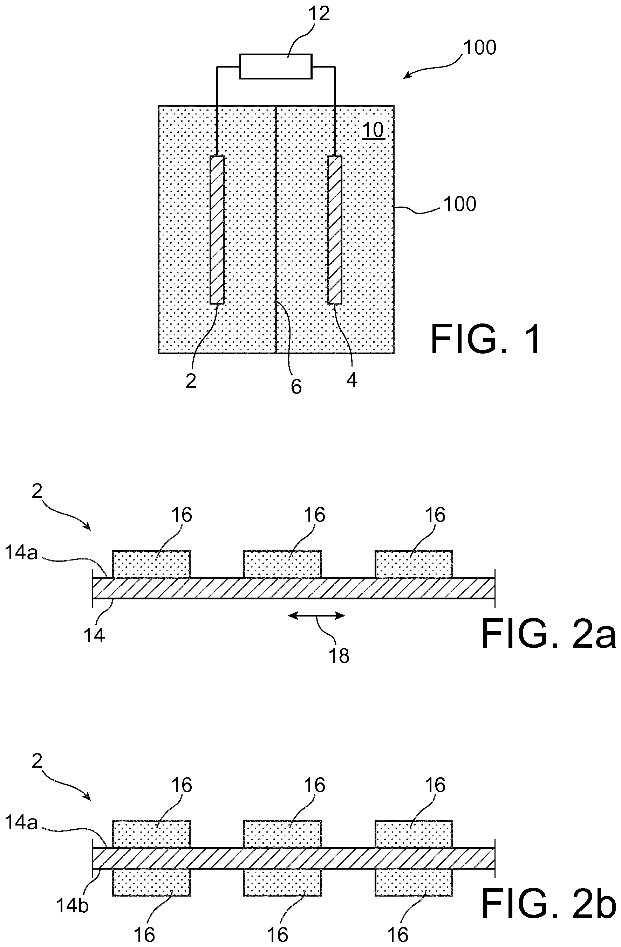

La figure 1 représente schématiquement une batterie 100 du type lithium-ion, dont le cœur est formé par l'assemblage d'une électrode positive 2 et d'une électrode négative 4, entre lesquelles est agencé un séparateur 6. Ce cœur électrochimique est placé dans un boitier étanche 8 qui est rempli d'un électrolyte liquide 10. De plus, de façon connue, les deux électrodes 2, 4 sont reliées à un récepteur 12.

L'invention vise à la fabrication des électrodes 2, 4, qui peuvent être fabriquées de façon sensiblement identique ou similaire. Par conséquent, seule la fabrication de l'électrode positive 2 sera décrite ci-après.

La figure 2a montre de façon plus détaillée la conception de l'électrode destinée à être obtenue par le procédé objet de l'invention. L'électrode 2 est dite à revêtement d'encre discontinu, étant donné qu'elle comprend un feuillard métallique 14 à la surface 14a de laquelle sont réalisées une pluralité de zones d'encre 16 espacées les unes des autres selon une direction longitudinale 18 de l'électrode 2. Après l'étape de calandrage qui sera décrite ci-après, l'électrode obtenue présente un feuillard métallique de l'ordre de 10 à 20 µm, tandis que l'épaisseur de chaque zone d'encre est de l'ordre de 80 à 400 µm. Cette encre comprend de manière conventionnelle les ingrédients constitutifs de l'électrode 2, à savoir par exemple le matériau actif qui permet la réaction au niveau de cette électrode, ou encore un liant polymérique ainsi qu'un matériau conducteur d'électricité. Cette encre se situe donc à la surface 14a du feuillard, qui est quant à lui réalisé dans un matériau à base de cuivre ou d'aluminium ou dans un autre matériau, par exemple un feuillard de carbone.

Sur la figure 2b, il est représenté une alternative de réalisation dans laquelle les deux surfaces opposées 14a, 14b sont chacune équipée d'une pluralité de zones d'encre 16, ces zones étant de préférence agencées symétriquement par rapport à un plan défini par le feuillard. Néanmoins, pour des raisons de clarté et de simplification de la description, il va être décrit par la suite seulement le mode de réalisation de la figure 2a, sur lequel seule l'une des deux surfaces opposées 14a de l'électrode est revêtue d'encre 16.

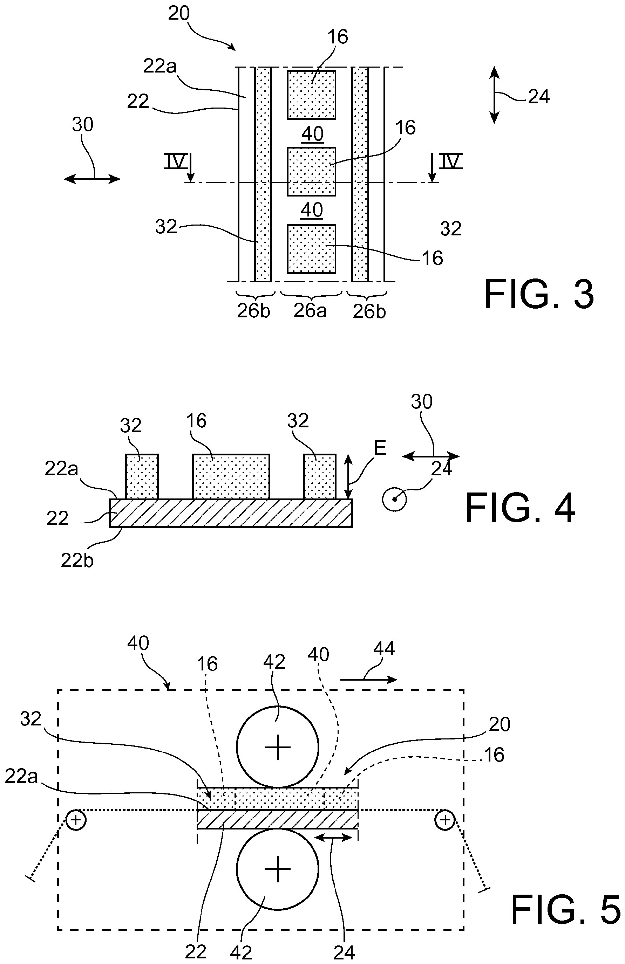

Tout d'abord en référence aux figures 3 et 4, il est réalisé un support métallique revêtu d'encre, auquel il est attaché la référence numérique générale 20. Il comprend le support 22 en tant que tel, ainsi que les zones d'encre 16 espacées les unes des autres selon une direction longitudinale 24 du support 22. Ces zones d'encres 16 sont réalisées sur un premier tronçon longitudinal 26a sensiblement centré sur le support 22. La largeur de ce tronçon 26a est sensiblement identique à celle de l'électrode désirée. Par conséquent, le support métallique 22 présente selon une direction latérale 30 de celui-ci, une largeur qui est supérieure à celle de l'électrode désirée. En effet, de part et d'autre du premier tronçon longitudinal 26a, il est prévu deux seconds tronçons 26b sur chacun desquels une zone d'encre additionnelle 32 continue est déposée. Chaque zone 32 prend ici la forme d'une bande parallèle à la direction longitudinale 24, orthogonale à la direction latérale 30. Les zones d'encre additionnelles 32 en forme de bandes présentent une largeur qui est préférentiellement inférieure à la largeur des zones d'encre 16.

Ainsi, le support métallique 22 est revêtu au niveau de sa surface 22a non seulement des zones d'encre 16 sur le premier tronçon central 26a, mais également de zones d'encre additionnelles continues 32, sur les seconds tronçons 26b décalés latéralement du premier tronçon. Ensemble, ces zones 16, 32 constituent un revêtement de support au sein duquel chacune de ces zones présentent une épaisseur E sensiblement identique, comme cela a été schématisé sur la figure 4. Il est par ailleurs noté que la surface opposée 22b est revêtue de manière similaire à la surface 22a, lorsqu'une électrode du type de celle de la figure 2b est souhaitée.

Grâce à cette conception, au sein du revêtement de support, une partie de chacune des zones d'encre additionnelles 32 se situe latéralement en regard de chaque zone évidée 40 située longitudinalement entre deux zones d'encre 16 directement consécutives du premier tronçon.

Une fois que ce support métallique revêtu d'encre 20 est réalisé, il subit une étape de calandrage au sein d'un dispositif de calandrage approprié 40. Ce dispositif, qui a été schématisé sur la figure 5, comprend en particulier des rouleaux de calandrage 42 entre lesquels le support revêtu 20 est mis en défilement selon une direction d'avancement 44 parallèle à la direction longitudinale 24 du support 22. Ces deux rouleaux 42 sont de préférence chromés, et capable d'exercer une pression importante au passage de l'électrode, cette pression pouvant par exemple atteindre 40 tonnes. L'écrasement qui en résulte permet d'optimiser les caractéristiques de la batterie, comme la densité d'énergie ou encore la conductivité électrique. Grâce à la présence des zones d'encre additionnelles 32, l'écartement entre les deux rouleaux reste identique durant tout le défilement du support revêtu 20, et même lors du passage des zones évidées 40 comme cela a été schématisé dans la figure 5. En effet, à cet instant, les rouleaux 42 sont en appui aux extrémités latérales du support revêtu 20, sur les deux bandes d'encre 32. Cela permet tout d'abord d'éviter les défauts de calandrage au niveau des extrémités longitudinales des zones d'encre 16. Mais le contact des rouleaux 42 avec le support revêtu 20 permet également d'assurer la continuité du défilement de ce support, précisément grâce au maintien du contact entre ces éléments. En effet, les rouleaux de calandrage 42 sont préférentiellement motorisés, et entrainés en rotation selon leurs axes perpendiculaires à la direction d'avancement 44. Aussi, le simple contact entre ces rouleaux 42 et le support revêtu 20 assure-t-il la mise en mouvement de ce support, selon la direction longitudinale 24.

A cet égard, il est noté que le calandrage s'effectue en continu, le support sortant des rouleaux 42 pouvant être ensuite enroulé de manière à pouvoir être ensuite re-déroulé puis tronçonné longitudinalement. Alternativement, un tronçonnement longitudinal peut également être envisagé directement après le passage à travers les rouleaux de calandrage 42.

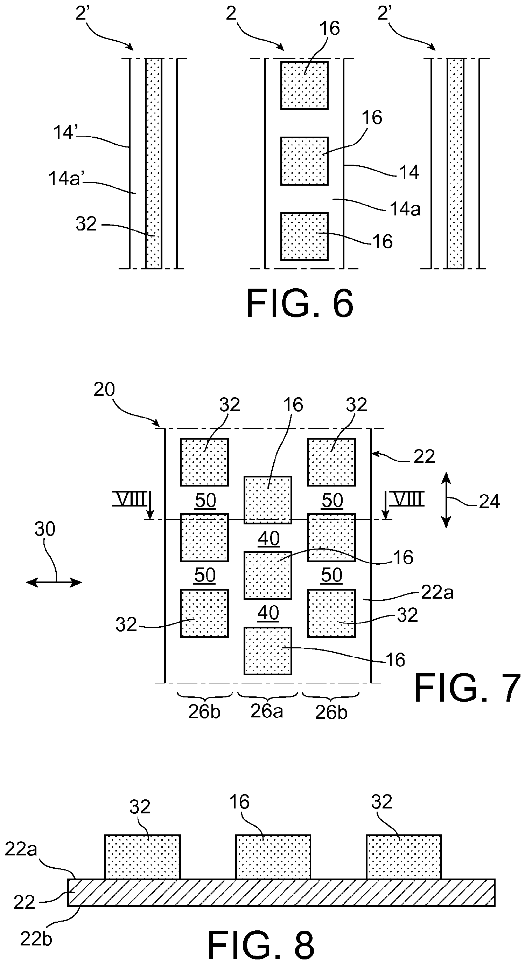

Après cette étape de calandrage, au cours de laquelle le rouleau 42 situé du côté du revêtement d'encre est donc en permanence au contact de ce même revêtement en défilement, il est opéré une étape de séparation des trois tronçons 26a, 26b, par exemple par découpe laser ou refente. Comme cela a été schématisé sur la figure 6, après cette découpe, il est obtenu par l'intermédiaire du premier tronçon l'électrode 2 montrée sur la figure 2a. Les deux autres parties issues des seconds tronçons 26b constituent alors chacune une électrode 2' formée à l'aide d'un feuillard 14' correspondant au second tronçon du support 22, revêtu sur sa surface 14a' d'une zone d'encre additionnelle continue 32. Il s'agit donc de deux électrodes 2' à revêtement d'encre continue, qui peuvent être utilisées dans d'autres batteries. Alternativement, l'encre 32 peut être retirée des feuillards 14', de manière à servir à la fabrication ultérieure d'autres électrodes.

A présent en référence aux figures 7 et 8, il est représenté un second mode de réalisation préféré de l'invention, dans lequel le support métallique revêtu 20 présente de nombreuses similitudes avec celui décrit précédemment. La différence réside ici dans le fait que sur les seconds tronçons 26b disposés de part et d'autre du premier tronçon 26a du support 22, l'encre est déposée non plus de façon continue, mais de manière discontinue de manière à former plusieurs zones d'encre additionnelles 32 espacées longitudinalement les unes des autres. Il est noté que dans ce mode de réalisation, ce sont donc trois tronçons qui forment le support 22. Cependant, ce nombre de tronçons peut varier de 2 à un nombre supérieur à 3, la limite étant fixée par la longueur des rouleaux de calandrage à travers lesquels ce support est destiné à défiler. A titre d'exemple, la longueur de ce rouleau peut être de l'ordre de 250 mm.

Quoiqu'il en soit, il est ici fait en sorte que le revêtement de support constitué par les zones d'encre 16 et les zones d'encre additionnelles 32 soient agencées en quinconce. Cela a pour conséquence qu'au moins une zone d'encre additionnelle 32 de chacun des deux seconds tronçons 26b se situent en regard latéralement de chaque zone évidée 40 située entre deux zones d'encre 16 directement consécutives. Mais également, une zone d'encre 16 du premier tronçon se trouve latéralement en regard de chaque zone évidée 50 située entre deux zones d'encre additionnelles 32 directement consécutives au sein d'un même second tronçon. Comme cela est d'ailleurs montré sur la figure 7, la disposition en quinconce qui a été adoptée est telle que les zones d'encre 16 et les zones d'encre additionnelles 32 se chevauchent partiellement selon la direction longitudinale 24.

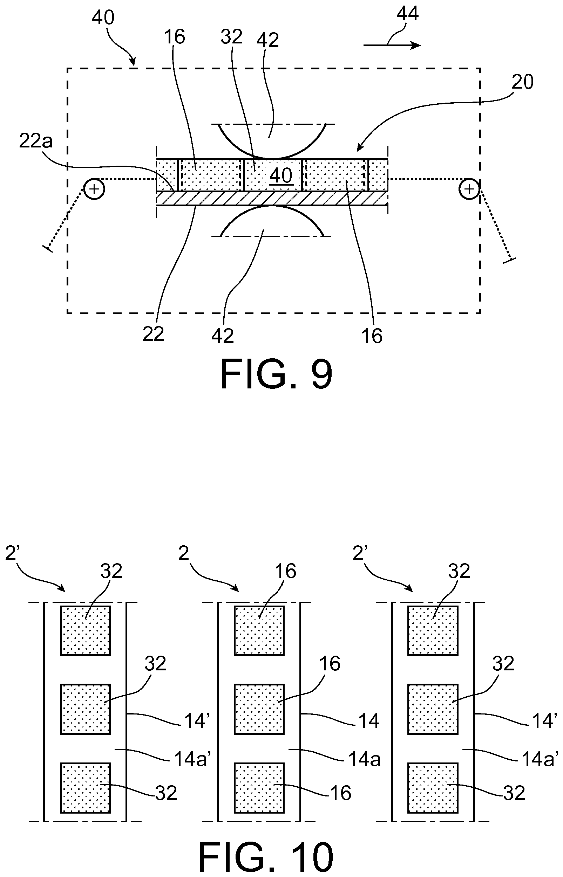

Ensuite, en référence à la figure 9, il est opéré une étape de calandrage similaire à celle décrite en référence à la figure 5 pour le premier mode de réalisation préféré. Le support revêtu 20 est donc en défilement selon la direction d'avancement 44, entre les rouleaux 42. Grâce à la présence des zones d'encre additionnelles 32, l'écartement entre les deux rouleaux 42 reste constant durant tout le défilement du support, même au passage des zones évidées 40, comme cela a été schématisé sur la figure 9. En effet, à cet instant, l'écartement entre les deux rouleaux 42 est assuré par le contact entre le rouleau supérieur 42 et les deux zones d'encre additionnelles 32 se situant latéralement en regard de la zone évidée 40 transitant par les rouleaux 42.

Ensuite, comme pour le premier mode de réalisation décrit ci-dessus, il est réalisé une étape de séparation des tronçons visant à la formation de l'électrode 2 via le premier tronçon, ainsi qu'à la formation de deux électrodes 2' chacune issue de l'un des seconds tronçons 26b. Il est noté que dans ce cas de figure, chacune des électrodes 2' présente un revêtement d'encre discontinu formé par les zones d'encre additionnelles 32 à la surface 14a' du feuillard 14'. Par conséquent, les deux électrodes 2' issues des deux tronçons 26b peuvent être de conception identique à l'électrode 2, et donc former des électrodes pour la constitution de batteries similaires.

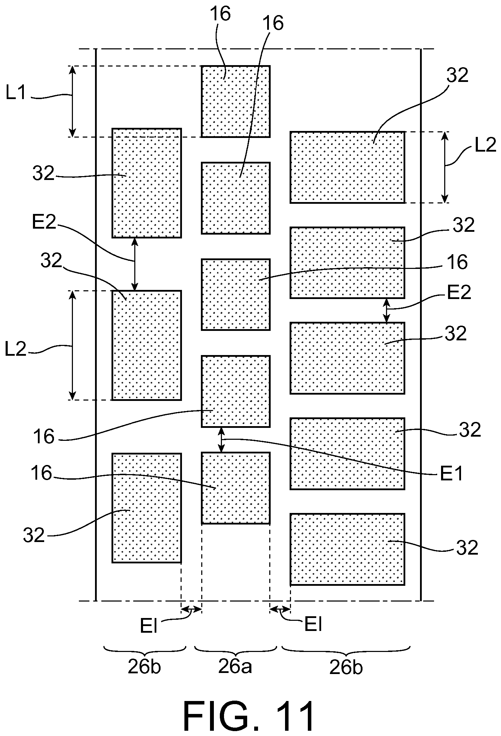

Selon un mode de réalisation encore différent, schématisé sur la figure 11, il est noté que les zones d'encre additionnelles 32 enduites sur les seconds tronçons 26b peuvent présenter des formes et dimensions différentes de celles des zones d'encre 16 du premier tronçon. En particulier, l'étendue longitudinale L1 des zones d'encre 16 peut être différente de l'étendue longitudinale L2 des zones d'encre additionnelles 32. De même, l'étendue longitudinale L2 de chaque zone d'encre additionnelle 32 peut être différent au sein des deux tronçons 26b. Il en est de même pour l'espacement E1 entre les zones d'encre 16, et l'espacement E2 entre les zones d'encre additionnelles 32 de chacun des deux tronçons 26b.

Enfin, toujours en référence à la figure 11, il est noté que les zones d'encre 16 du premier tronçon 26a sont espacées latéralement des zones d'encre additionnelles 32 de chaque second tronçon 26b, un écartement latéral El non nul étant adopté entre ces ensembles de zones d'encre.

Bien entendu, diverses modifications peuvent être apportées par l'homme du métier à l'invention qui vient d'être décrite, uniquement à titre d'exemples non limitatifs.

## Revendications

1. Procédé de fabrication d'au moins une électrode (2) de batterie (100) à revêtement d'encre discontinu, ladite électrode comprenant un feuillard métallique (14) revêtu, sur au moins l'une de ses deux surfaces opposées (14a), d'une pluralité de zones d'encre (16) espacées les unes des autres selon une direction longitudinale (18) de l'électrode, le procédé comprenant les étapes suivantes :
- réalisation des zones d'encre (16) sur un premier tronçon longitudinal (26a) d'un support métallique (22) de largeur supérieure à celle du feuillard (14) de l'électrode destinée à être fabriquée, et réalisation d'au moins une zone d'encre additionnelle (32) sur au moins un second tronçon longitudinal (26b) du support décalé du premier tronçon (26a) selon une direction latérale (30) du support, l'ensemble formé par les zones d'encre (16) du premier tronçon (26a) étant espacé latéralement de l'ensemble formé par chaque zone d'encre additionnelle (32) d'au moins un second tronçon (26b) lui étant directement consécutif dans la direction latérale (30), de manière à définir un écartement latéral non nul (El) entre ces ensembles de zones d'encres (16, 32), les zones d'encre (16) ainsi que chaque zone d'encre additionnelle (32) formant conjointement, sur l'une des deux surfaces opposées (22a) du support, un revêtement de support agencé de telle sorte qu'au moins une zone d'encre additionnelle (32) d'un second tronçon se situe en regard latéralement de chaque zone évidée (40) agencée entre deux zones d'encre (16) directement consécutives du premier tronçon (26a) ;
- calandrage du support métallique (22) équipé de son revêtement (16, 32), par défilement entre des rouleaux de calandrage (42) selon une direction longitudinale de support (24) orthogonale à sa direction latérale (30), le rouleau de calandrage (42) situé du côté du revêtement de support (16, 32) étant en permanence au contact de ce revêtement durant le calandrage ; et
- séparation des tronçons (26a, 26b) de manière à obtenir l'électrode (2) via le premier tronçon (26a), ainsi qu'au moins une autre électrode (2') via au moins l'un des seconds tronçons (26b).

2. Procédé selon la revendication 1, **caractérisé en ce qu'**au moins un second tronçon de support (26b) est revêtu d'une zone d'encre additionnelle (32) continue le long de la direction longitudinale (24) du support (22).

3. Procédé selon la revendication 2, **caractérisé en ce que** deux seconds tronçons de support (26b) se situent respectivement de part et d'autre du premier tronçon (26a), et **en ce que** chacun des deux seconds tronçons est revêtu d'une zone d'encre additionnelle (32) continue le long de la direction longitudinale (24) du support (22).

4. Procédé selon la revendication 2 ou la revendication 3, **caractérisé en ce qu'**après ladite étape de séparation des tronçons, au moins l'un des seconds tronçons (26b) constitue une autre électrode (2') à revêtement d'encre continu.

5. Procédé selon la revendication 1, **caractérisé en ce qu'**au moins un second tronçon de support (26b) est revêtu d'une pluralité de zones d'encre additionnelles (32) espacées les unes des autres selon la direction longitudinale (24) du support (22).

6. Procédé selon la revendication 5, **caractérisé en ce que** plusieurs seconds tronçons de support (26b) se situent de part et d'autre du premier tronçon (26a), et **en ce que** chacun des seconds tronçons (26b) est revêtu d'une pluralité de zones d'encre additionnelles (32) espacées les unes des autres selon la direction longitudinale (24) du support (22).

7. Procédé selon la revendication 5 ou la revendication 6, **caractérisé en ce que** les zones d'encre (16) et zones d'encre additionnelles (32) sont agencées en quinconce sur le support (22), et/ou **en ce que** l'ensemble formé par les zones d'encre (16) du premier tronçon (26a) est identique à l'ensemble formé par les zones d'encre additionnelles (32) d'au moins un second tronçon (26b) lui étant directement consécutif dans la direction latérale (30).

8. Procédé selon la revendication 5 ou la revendication 6, **caractérisé en ce que** l'étendue longitudinale (L1) des zones d'encre (16) diffère de l'étendue longitudinale (L2) des zones d'encre additionnelles (32) d'au moins l'un des seconds tronçons (26b), et/ou **en ce que** l'espacement (E1) entre deux zones d'encre (16) directement consécutives diffère de l'espacement (E2) entre deux zones d'encre additionnelles (32) directement consécutives d'au moins l'un des seconds tronçons (26b).

9. Procédé selon l'une quelconque des revendications 5 à 8, **caractérisé en ce qu'**après ladite étape de séparation des tronçons, au moins l'un des seconds tronçons (26b) constitue une autre électrode (2') à revêtement d'encre discontinu.

10. Procédé selon l'une quelconque des revendications précédentes, **caractérisé en ce que** le support (22) est réalisé dans un matériau à base de cuivre ou d'aluminium ou par un feuillard de carbone.

11. Procédé selon l'une quelconque des revendications précédentes, **caractérisé en ce que** lors de l'étape de calandrage, le défilement du support revêtu d'encre (20) est assuré par contact de ce dernier avec les rouleaux de calandrage (42) entraînés en rotation.

12. Procédé selon l'une quelconque des revendications précédentes, **caractérisé en ce que** les zones d'encre (16) et les zones d'encre additionnelles (32) du revêtement de support présentent chacune une épaisseur (E) sensiblement identique.

13. Procédé selon l'une quelconque des revendications précédentes, **caractérisé en ce que** l'autre des deux faces opposées (22b) du support métallique (22) est également revêtue de zones d'encre ainsi que d'au moins une zone d'encre additionnelle.

14. Support métallique revêtu d'encre (20), destiné à la fabrication d'au moins une électrode (2) de batterie à revêtement d'encre discontinu, ladite électrode étant destinée à comprendre un feuillard métallique (14) revêtu, sur au moins l'une de ses deux surfaces opposées (14a), d'une pluralité de zones d'encre (16) espacées les unes des autres selon une direction longitudinale (18) de l'électrode, **caractérisé en ce qu'**il comprend un support métallique (22) revêtu, sur au moins l'une de ses deux surfaces opposées (22a) :
- de zones d'encre (16) sur un premier tronçon longitudinal (26a) du support ;
- d'au moins une zone d'encre additionnelle (32) sur au moins un second tronçon longitudinal (26b) du support décalé du premier tronçon selon une direction latérale (30) du support, les zones d'encre (16) ainsi que chaque zone d'encre additionnelle (32) formant conjointement un revêtement de support agencé de telle sorte qu'au moins une zone d'encre additionnelle (32) d'un second tronçon (26b) se situe en regard latéralement de chaque zone évidée (40) agencée entre deux zones d'encre (16) directement consécutives du premier tronçon (26a),
et **en ce que** l'ensemble formé par les zones d'encre (16) du premier tronçon (26a) est espacé latéralement de l'ensemble formé par chaque zone d'encre additionnelle (32) d'au moins un second tronçon (26b) lui étant directement consécutif dans la direction latérale (30), de manière à définir un écartement latéral non nul (El) entre ces ensembles de zones d'encres (16, 32).

## Patentansprüche

1. Verfahren zur Herstellung wenigstens einer Elektrode (2) einer Batterie (100) mit diskontinuierlicher Tintenbeschichtung, wobei die Elektrode ein Metallband (14) umfasst, das auf wenigstens einer seiner zwei entgegengesetzten Oberflächen (14a) mit einer Mehrzahl von Tintenzonen (16) beschichtet ist, die voneinander entlang einer Längsrichtung (18) der Elektrode beabstandet sind, wobei das Verfahren die folgenden Schritte umfasst:
- Realisieren der Tintenzonen (16) auf einem ersten Längsabschnitt (26a) eines Metallträgers (22) mit einer größeren Breite als jene des Bands (14) der Elektrode, die hergestellt werden soll, und Realisieren wenigstens einer zusätzlichen Tintenzone (32) auf wenigstens einem zweiten Längsabschnitt (26b) des Trägers, der von dem ersten Abschnitt (26a) entlang einer seitlichen Richtung (30) des Trägers versetzt ist, wobei die Gesamtanordnung, die durch die Tintenzonen (16) des ersten Abschnitts (26a) gebildet wird, seitlich von der Gesamtanordnung beabstandet ist, die durch jede zusätzliche Tintenzone (32) wenigstens eines zweiten Abschnitts (26b) gebildet wird, der ihm direkt in der seitlichen Richtung (30) folgt, derart, dass ein seitlicher Abstand ungleich Null (El) definiert wird zwischen diesen Gesamtanordnungen von Tintenzonen (16, 32), wobei die Tintenzonen (16) sowie jede zusätzliche Tintenzone (32) zusammen auf der einen der zwei entgegengesetzten Oberflächen (22a) des Trägers eine Trägerbeschichtung bilden, die derart ausgebildet ist, dass wenigstens eine zusätzliche Tintenzone (32) eines zweiten Abschnitts sich seitlich gegenüber jeder ausgehöhlten Zone (40) befindet, die zwischen zwei Tintenzonen (16) angeordnet ist, die direkt auf den ersten Abschnitt (26a) folgen;
- Kalandrieren des Metallträgers (22), der mit seiner Beschichtung (16, 32) ausgestattet ist, durch Rollen zwischen Kalandrierungsrollen (42) entlang einer Längsrichtung des Trägers (24) orthogonal zu seiner seitlichen Richtung (30), wobei die Kalandrierungsrolle (42), die sich auf der Seite der Beschichtung des Trägers (16, 32) befindet, permanent in Kontakt mit dieser Beschichtung während der Kalandrierung ist; und
- Separieren der Abschnitte (26a, 26b) derart, dass die Elektrode (2) über den ersten Abschnitt (26a) erhalten wird, sowie wenigstens eine andere Elektrode (2' über wenigstens einen der zweiten Abschnitte (26b).

2. Verfahren nach Anspruch 1, **dadurch gekennzeichnet, dass** wenigstens ein zweiter Trägerabschnitt (26b) mit einer zusätzlichen Tintenzone (32) beschichtet ist, die entlang der Längsrichtung (24) des Trägers (22) kontinuierlich ist.

3. Verfahren nach Anspruch 2, **dadurch gekennzeichnet, dass** zwei zweite Trägerabschnitte (26b) sich auf jeweiligen beiden Seiten des ersten Abschnitts (26a) befinden, und dass jeder der zwei zweiten Abschnitte mit einer zusätzlichen Tintenzone (32) beschichtet ist, die entlang der Längsrichtung (24) des Trägers (22) kontinuierlich ist.

4. Verfahren nach Anspruch 2 oder Anspruch 3, **dadurch gekennzeichnet, dass** nach dem Schritt des Separierens der Abschnitte wenigstens einer der zweiten Abschnitte (26b) eine andere Elektrode (2') mit kontinuierlicher Tintenbeschichtung bildet.

5. Verfahren nach Anspruch 1, **dadurch gekennzeichnet, dass** wenigstens ein zweiter Trägerabschnitt (26b) mit einer Mehrzahl von zusätzlichen Tintenzonen (32) beschichtet ist, die voneinander entlang der Längsrichtung (24) des Trägers (22) beabstandet sind.

6. Verfahren nach Anspruch 5, **dadurch gekennzeichnet, dass** mehrere zweite Trägerabschnitte (26b) sich auf beiden Seiten des ersten Abschnitts (26a) befinden, und dass jeder der zweiten Abschnitte (26b) mit einer Mehrzahl von zusätzlichen Tintenzonen (32) beschichtet ist, die voneinander entlang der Längsrichtung (24) des Trägers (22) beabstandet sind.

7. Verfahren nach Anspruch 5 oder Anspruch 6, **dadurch gekennzeichnet, dass** die Tintenzonen (16) und zusätzlichen Tintenzonen (32) in einer Quincunxanordnung auf dem Träger (22) angeordnet sind, und/oder dass die durch die Tintenzonen (16) des ersten Abschnitts (26a) gebildete Gesamtanordnung identisch ist zu der Gesamtanordnung, die durch die zusätzlichen Tintenzonen (32) wenigstens eines zweiten Abschnitts (26b) gebildet wird, der ihm direkt in der seitlichen Richtung (30) folgt.

8. Verfahren nach Anspruch 5 oder Anspruch 6, **dadurch gekennzeichnet, dass** die Längsausdehnung (L1) der Tintenzonen (16) von der Längsausdehnung (L2) der zusätzlichen Tintenzonen (32) wenigstens eines der zweiten Abschnitte (26b) verschieden ist, und/oder dass der Abstand (E1) zwischen zwei direkt aufeinanderfolgenden Tintenzonen (16) von dem Abstand (E2) zwischen zwei direkt aufeinander folgenden zusätzlichen Tintentzonen (32) wenigstens eines der zweiten Abschnitte (26b) verschieden ist.

9. Verfahren nach einem der Ansprüche 5 bis 8, **dadurch gekennzeichnet, dass** nach dem Schritt des Separierens der Abschnitte wenigstens einer der zweiten Abschnitte (26b) eine andere Elektrode (2') mit einer diskontinuierlichen Tintenbeschichtung bildet.

10. Verfahren nach einem der vorhergehenden Ansprüche, **dadurch gekennzeichnet, dass** der Träger (22) aus einem Material auf Basis von Kupfer oder von Aluminium oder durch ein Kohlenstoffband realisiert ist.

11. Verfahren nach einem der vorhergehenden Ansprüche, **dadurch gekennzeichnet, dass** während des Schritts des Kalandrierens das Rollen des mit Tinte beschichteten Trägers (20) gewährleistet wird durch Kontakt dieses letztgenannten mit den Kalandrierungsrollen (42), die zur Drehung angetrieben werden.

12. Verfahren nach einem der vorhergehenden Ansprüche, **dadurch gekennzeichnet, dass** die Tintenzonen (16) und die zusätzlichen Tintenzonen (32) der Beschichtung des Trägers jeweils eine im Wesentlichen identische Dicke (E) aufweisen.

13. Verfahren nach einem der vorhergehenden Ansprüche, **dadurch gekennzeichnet, dass** die andere der zwei entgegengesetzten Flächen (22b) des Metallträgers (22) ebenfalls mit Tintenzonen sowie mit wenigstens einer zusätzlichen Tintenzone beschichtet ist.

14. Metallträger, der mit Tinte beschichtet ist (20), der zur Herstellung wenigstens einer Elektrode (2) einer Batterie mit diskontinuierlicher Tintenbeschichtung ausgelegt ist, wobei die Elektrode dazu ausgelegt ist, ein Metallband (14) zu umfassen, das auf wenigstens einer seiner zwei entgegengesetzten Oberflächen (14a) mit einer Mehrzahl von Tintenzonen (16) beschichtet ist, die voneinander entlang einer Längsrichtung (18) der Elektrode beabstandet sind, **dadurch gekennzeichnet, dass** er einen Metallträger (22) umfasst, der auf wenigstens einer seiner zwei entgegengesetzten Oberflächen (22a) beschichtet ist mit:
- Tintenzonen (16) auf einem ersten Längsabschnitt (26a) des Trägers;
- wenigstens einer zusätzlichen Tintenzone (32) auf wenigstens einem zweiten Längsabschnitt (26b) des Trägers, der von dem ersten Abschnitt entlang einer seitlichen Richtung (30) des Trägers versetzt ist, wobei die Tintenzonen (16) sowie jede zusätzliche Tintenzone (32) zusammen eine Trägerbeschichtung bilden, die derart ausgelegt ist, dass wenigstens eine zusätzliche Tintenzone (32) eines zweiten Abschnitts (26b) sich seitlich gegenüber jeder ausgehöhlten Zone (40) befindet, die zwischen zwei Tintenzonen (16) angeordnet ist, die direkt auf den ersten Abschnitt (26a) folgen,
und dass die Gesamtanordnung, die durch die Tintenzonen (16) des ersten Abschnitts (26a) gebildet wird, seitlich von der Gesamtanordnung beabstandet ist, die durch jede zusätzliche Tintenzone (32) wenigstens eines zweiten Abschnitts (26b) gebildet wird, der ihm direkt in der seitlichen Richtung (30) folgt, derart, dass ein seitlicher Abstand ungleich Null (El) zwischen diesen Gesamtanordnungen von Tintenzonen (16, 32) definiert wird.

## Claims

1. Method of manufacturing at least one electrode (2) for a battery (100) with a discontinuous ink coating, said electrode comprising a metal foil (14) coated with a plurality of ink zones (16) at a spacing from each other along a longitudinal direction (18) of the electrode on at least one of its two opposite surfaces (14a), the method comprising the following steps:
- make ink zones (16) on a first longitudinal segment (26a) of a metallic support (22) wider than the foil (14) of the electrode to be manufactured, and make at least one additional ink zone (32) on at least one second longitudinal segment (26b) of the support offset from the first segment (26a) along a lateral direction (30) of the support, the assembly composed of the ink zones (16) of the first segment (26a) being laterally spaced from the assembly formed by each additional ink zone (32) of at least one second segment (26b) directly consecutive to it along the lateral direction (30), in order to define a non-zero lateral spacing (El) between these assemblies of ink zones (16, 32), the ink zones (16) and each additional ink zone (32) jointly forming a support coating on one of the two opposite faces (22a) of the support, such that at least one additional ink zone (32) of a second segment laterally faces each recessed zone (40) located between two directly consecutive ink zones of the first segment (26a);
- calendering of the metallic support (22) provided with its coating (16, 32), by movement between the calendering rolls (42) along a longitudinal direction of the support (24) orthogonal to its lateral direction (30), the calendering roll (42) located on the side of the support coating (16, 32) being permanently in contact with this coating during calendering; and
- separation of the segments (26a, 26b) so as to obtain the electrode (2) through the first segment (26a), and at least one other electrode (2') through at least one of the second segments (26b).

2. Method according to claim 1, **characterised in that** at least one second support segment (26b) is coated with an additional continuous ink zone (32) along the longitudinal direction (24) of the support (22).

3. Method according to claim 2, **characterised in that** two second support segments (26b) are located one on each side of the first segment (26a), and **in that** each of the two second segments is coated with an additional continuous ink zone (32) along the longitudinal direction (24) of the support (22).

4. Method according to claim 2 or claim 3, **characterised in that** after said segment separation step, at least one of the second segments (26b) forms another electrode (2') with a continuous ink coating.

5. Method according to claim 1, **characterised in that** at least one second support segment (26b) is coated with a plurality of additional ink zones (32) at a spacing from each other along the longitudinal direction (24) of the support (22).

6. Method according to claim 5, **characterised in that** several second support segments (26b) are located one on each side of the first segment (26a), and **in that** each of the second segments (26b) is coated with a plurality of additional continuous ink zones (32) at a spacing from each other along the longitudinal direction (24) of the support (22).

7. Method according to claim 5 or claim 6, **characterised in that** the ink zones (16) and the additional ink zones (32) are staggered on the support (22), and/or **in that** the assembly formed by the ink zones (16) of the first segment (26a) is identical to the assembly formed by the additional ink zones (32) of at least one second segment (26b) directly consecutive to it along the lateral direction (30).

8. Method according to claim 5 or claim 6, **characterised in that** the longitudinal extent (L1) of the ink zones (16) is different from the longitudinal extent(L2) of the additional ink zones (32) of at least one of the second segments (26b), and/or **in that** the space (E1) between two directly consecutive ink zones (16) is different from the space (E2) between two additional directly consecutive ink zones (32) of at least one of the second segments (26b).

9. Method according to any one of claims 5 to 8, **characterised in that** after said segment separation step, at least one of the second segments (26b) forms another electrode (2') with a discontinuous ink coating.

10. Method according to any one of the previous claims, **characterised in that** the support (22) is made from a copper or aluminium-based material or from carbon foil.

11. Method according to any one of the previous claims, **characterised in that** during the calendering step, the support coated with ink (20) is advanced by contact between the support and the calendering rolls (42) driven in rotation.

12. Method according to any one of the previous claims, **characterised in that** the thicknesses (E) of the ink zones (16) and of the additional ink zones (32) of the support coating are almost identical.

13. Method according to any one of the previous claims, **characterised in that** the other of the two opposite faces (22b) of the metallic support (22) is also coated with ink zones and at least one additional ink zone.

14. Metallic support for an ink coating (20) for use for manufacturing at least one electrode (2) for a battery with a discontinuous ink coating, said electrode being designed to include a metal foil (14) coated with a plurality of ink zones (16) at a spacing from each other along a longitudinal direction (18) of the electrode on at least one of its two opposite surfaces (14a), **characterised in that** it comprises a metallic support (22) coated on at least one of its two opposite surfaces (22a) with:
- ink zones (16) on a first longitudinal segment (26a) of the support;
- at least one additional ink zone (32) on at least one second longitudinal segment (26b) of the support offset from the first segment along a lateral direction (30) of the support, the ink zones (16) and each additional ink zone (32) jointly forming a support coating arranged such that at least one additional ink zone (32) of a second segment (26b) is located laterally facing each recessed zone (40) formed between two directly consecutive ink zones (16) of the first segment (26a),
and **in that** the assembly formed by the ink zones (16) of the first segment (26a) is laterally spaced from the assembly formed by each additional ink zone (32) of at least one second segment (26b) directly consecutive to it along the lateral direction (30), in order to define a non-zero lateral spacing (El) between these assemblies of ink zones (16, 32).
